(19) **Europäisches Patentamt / European Patent Office / Office européen des brevets**

(11) **EP 4 637 200 A1**

(12) **EUROPEAN PATENT APPLICATION**
published in accordance with Art. 153(4) EPC

(43) Date of publication:
22.10.2025 Bulletin 2025/43

(21) Application number: 23914572.5

(22) Date of filing: 28.12.2023

(51) International Patent Classification (IPC):
*H04W 16/28* (2009.01)

(52) Cooperative Patent Classification (CPC):
H04L 5/00; H04W 16/28; H04W 72/044;
H04W 72/0446

(86) International application number:
PCT/CN2023/142781

(87) International publication number:
WO 2024/146440 (11.07.2024 Gazette 2024/28)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 06.01.2023 CN 202310019054

(71) Applicant: Huawei Technologies Co., Ltd.
Shenzhen, Guangdong 518129 (CN)

(72) Inventors:
• WU, Yuandong
  Shenzhen, Guangdong 518129 (CN)
• GAO, Xinyu
  Shenzhen, Guangdong 518129 (CN)
• HE, Kai
  Shenzhen, Guangdong 518129 (CN)
• LIU, Kunpeng
  Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **COMMUNICATION METHOD AND APPARATUS**

(57) A communication method and apparatus are provided. The method includes: A first network device obtains first weight information of a second network device, and delivers the first weight information to the second network device; determines first indication information based on a first uplink reference signal reported by the second network device and a second uplink reference signal reported by a terminal device, where the first indication information indicates second weight information of the second network device, the first weight information is separately associated with the second weight information and the first indication information, and the second weight information is a weight of the second network device when the first network device communicates with the terminal device; and sends the first indication information to the second network device, to indicate the second network device to modify weight information and adjust a reflected beam, so that an adjusted reflected beam has a high beam gain at a location of the terminal device, to increase a beam gain of the reflected beam at the terminal device and strength of an obtained signal.

A first network device obtains first weight information of a second network device and delivers the first weight information to the second network device — 510

The first network device determines first indication information based on a first uplink reference signal reported by the second network device and a second uplink reference signal reported by a terminal device — 520

The first network device sends the first indication information to the second network device — 530

FIG. 5

**Description**

CROSS-REFERENCE TO RELATED APPLICATIONS

This application claims priority to Chinese Patent Application No. 202310019054.1, filed with the China National Intellectual Property Administration on January 6, 2023 and entitled "COMMUNICATION METHOD AND APPARATUS", which is incorporated herein by reference in its entirety.

TECHNICAL FIELD

This application relates to the field of wireless communication technologies, and in particular, to a communication method and apparatus.

BACKGROUND

In scenarios such as FWA (Fixed Wireless Access, fixed wireless access) and indoor communication, an IRS (Intelligent Reflecting Surface, intelligent reflecting surface) may be installed, and a panel of the IRS performs directional reflection on an incident signal, to reduce a signal energy loss caused by diffuse reflection.

Currently, if a distance between a terminal device and the IRS is less than a specified distance, it is considered that the IRS works in a near field scenario. In the near field scenario of the IRS, a signal reflected by the IRS is emerged as a spherical wave, and an angle of a steering vector is different from an actual reflection angle of each array element. Therefore, in the near field scenario, a reflected beam formed by the IRS based on the reflected signal mismatches the steering vector. Consequently, the reflected beam of the IRS has a signal energy gain loss in the near field scenario, and performance of a signal obtained by the terminal device is affected.

SUMMARY

Embodiments of this application provide a communication method and apparatus, to reduce an energy gain loss of communication performed by a terminal device in a near field scenario, and improve strength of a signal obtained by the terminal device.

According to a first aspect, this application provides a communication method. The method includes:

A first network device obtains first weight information of a second network device, and delivers the first weight information to the second network device.

The first network device determines first indication information based on a first uplink reference signal reported by the second network device and a second uplink reference signal reported by a terminal device, where the first indication information indicates second weight information of the second network device, the first weight information is separately associated with the second weight information and the first indication information, and the second weight information is a weight of the second network device when the first network device communicates with the terminal device.

The first network device sends the first indication information to the second network device.

In an implementation, the first network device or the second network device receives a third uplink reference signal reported by the terminal device, and determines the first indication information based on the third uplink reference signal, where the third uplink reference information includes location information of the terminal device and is used to determine first distance information, and the first distance information indicates a distance and/or a delay between the second network device and the terminal device.

Based on the foregoing solution, in this application, the first network device may determine the first distance information between the second network device and the terminal device in two manners. In one manner, the first network device determines the first distance information based on the first uplink reference signal reported by the second network and the second uplink reference signal reported by the terminal device. In the other manner, the first network device determines the first distance information based on the third uplink reference signal reported by the terminal device. In this way, the first network device determines, based on the first distance information, whether the terminal device is in a near field scenario of the second network device, and then indicates, by using the first indication information, the second network device whether to adjust weight information, that is, whether to adjust a phase of each array element of the second network device.

The first weight information being associated with the first indication information means that the terminal device sends an uplink reference signal when the second network device generates a first reflected beam based on the first weight information, to determine the first distance information; and determines the first indication information based on the first distance information. The first weight information being associated with the second weight information means that the second network device is configured to: modify the first weight information to the second weight information, and generate a second reflected beam based on the second weight information.

The first network device delivers the first indication information to the second network device, to indicate the second network device to modify the first weight information to the second weight information and adjust the reflected beam generated by the second network device, so that an adjusted reflected beam has a high beam gain at a location of the terminal device, thereby improving an energy gain of the reflected beam at the terminal device and strength of an obtained signal.

In some embodiments, the method further includes:

The first network device receives panel information reported by the second network device, where the panel information includes at least one of the following: a quantity of horizontal array elements, a quantity of vertical array elements, an array element spacing, a panel size, and a panel orientation of the second network device.

Based on the foregoing solution, the panel information is used to determine distance threshold information of the second network device, so as to determine, based on the distance threshold information, whether the terminal device is in the near field scenario of the second network device.

In some embodiments, the method further includes:

The first network device determines panel grouping information of the second network device based on the panel information, the first uplink reference signal, and the second uplink reference signal, where the panel grouping information is used to group all array elements on a panel of the second network device into at least two sub-panels, and array elements on any two sub-panels are not intersected.

The first network device sends the panel grouping information to a second network.

Based on the foregoing solution, in an implementation, when determining that the terminal device is in the near field scenario relative to the second network device, the first network device groups the panel of the second network device into at least two sub-panels, so that a reflected beam generated on any sub-panel is a far-field beam instead of a near-field beam for the terminal device. In this way, an energy gain loss of a reflected beam at the terminal device in the near field scenario is avoided.

In some embodiments, the method further includes:

The first network device sends second indication information to the second network device, where the second indication information indicates N sets of specified weights corresponding to each sub-panel, N reference signal time-frequency resources, and an association relationship between the N reference signal time-frequency resources and the N sets of specified weights, to indicate that a weight of the second network device on an $i^{th}$ reference signal time-frequency resource is an $i^{th}$ set of specified weights, and $1 \leq i \leq N$.

Based on the foregoing solution, the second network device is indicated to adjust the reflected beam based on the N sets of specified weights, so as to change a beam gain at the location of the terminal device.

In some embodiments, determining, by the first network device, the first indication information includes:

The first network device sends a downlink reference signal at an $i^{th}$ reference signal time-frequency resource location, and receives an $i^{th}$ piece of channel state information reported by the terminal device, where the downlink reference signal is reflected by the second network device to the terminal device.

The first network device determines the first indication information based on N pieces of channel state information.

Based on the foregoing solution, the $i^{th}$ piece of channel state information reported by the terminal device may indicate strength of a signal obtained by the terminal device, so as to determine a beam gain of a reflected beam that is generated by the second network device based on the $i^{th}$ set of specified weights and that is at the location of the terminal device. The N sets of specified weights are traversed, and an optimal set of specified weights is selected from the N sets of specified weights based on the N pieces of channel state information corresponding to the N sets of specified weights. Therefore, the second network device generates a reflected beam based on the optimal specified weights, to increase a beam gain at the location of the terminal device.

In some embodiments, determining, by the first network device, the first indication information includes:

The first network device determines the first indication information based on the panel information reported by the second network device.

Based on the foregoing solution, in an implementation, when determining that the terminal device is in the near field scenario relative to the second network device, the first network device directly indicates, by using the first indication information, the second network device to determine the second weight information, so that the second network device modifies the first weight information of the second network device to the second weight information. In this way, in the reflected beam generated by the second network device based on the second weight information, there is a high beam gain at the location of the terminal device, and strength of a signal obtained by the terminal device is improved.

In another implementation, when determining that the terminal device is in a far field scenario relative to the second network device, the first network device may perform representation based on an association relationship between the second weight information and the first weight information, to indicate that the terminal device is in the far field scenario of the reflected beam generated by the second network device, and further indicate that the second network device does not need to modify the weight information.

According to a second aspect, an embodiment of this application provides a communication method. The method includes:

A second network receives first weight information sent by a first network device.

The second network device reports a first uplink reference signal to the first network device.

The second network device receives first indication information sent by the first network device.

The second network device determines second weight information based on the first indication information, where the first weight information is separately associated with the second weight information and the first indication information, and the second weight is a weight of the second network device when the first network device communicates with a terminal device.

Based on the foregoing solution, after receiving the first indication information delivered by the first network device, the second network device modifies the first weight information to the second weight information, and generates a reflected beam based on the second weight information, to increase a beam gain at a location of the terminal device and improve strength of a signal obtained by the terminal device.

In some embodiments, the method further includes:

The second network device reports panel information to the first network device, where the panel information includes at least one of the following: a quantity of horizontal array elements, a quantity of vertical array elements, an array element spacing, a panel size, and a panel orientation of the second network device.

Based on the foregoing solution, the panel information is used to determine distance threshold information of the second network device, so as to determine, based on the distance threshold information, whether the terminal device is in a near field scenario of the second network device.

In some embodiments, the method further includes:

The second network device receives panel grouping information sent by the first network device, where the panel grouping information is used to group all array elements on a panel of the second network device into at least two sub-panels, and array elements on any two sub-panels are not intersected.

Based on the foregoing solution, the panel of the second network device is grouped into at least two sub-panels, so that a reflected beam generated on any sub-panel is a far-field beam instead of a near-field beam for the terminal device. In this way, an energy gain loss of a reflected beam at the terminal device in the near field scenario is avoided.

In some embodiments, the method further includes:

The second network device receives second indication information sent by the first network device, where the second indication information indicates N sets of specified weights corresponding to each sub-panel, N reference signal time-frequency resource locations, and an association relationship between the N reference signal time-frequency resource locations and the N sets of specified weights, a weight of the second network device on an $i^{th}$ reference signal time-frequency resource is an $i^{th}$ set of specified weights, and $1 \le i \le N$.

Based on the foregoing solution, the weight of the second network device on the $i^{th}$ reference signal time-frequency resource is the $i^{th}$ set of specified weights, so that the terminal device reports an $i^{th}$ piece of channel state information in a reflected beam generated based on the $i^{th}$ set of specified weights, and a total of N pieces of channel state information are reported. The first network device selects an optimal set of specified weights from the N sets of specified weights based on the N pieces of channel state information, so that the second network device generates a reflected beam based on the optimal specified weights, to increase a beam gain at the location of the terminal device.

In some embodiments, the first indication information is determined by the first network device based on the panel information reported by the second network device.

According to a third aspect, an embodiment of this application provides a communication method, including:

A terminal device reports a second uplink reference signal to a first network device, for the first network device to determine first indication information; or

reports a third uplink reference signal to a second network device, for the second network device to determine first distance information, where the first distance information indicates a distance and/or a delay between the second network device and the terminal device.

According to a fourth aspect, an embodiment of this application provides a network data traffic processing apparatus, including one or more processors, where when instructions of one or more computer programs are executed by the one or more processors, the apparatus is enabled to perform the method according to the first aspect, the second aspect, or the third aspect.

According to a fifth aspect, an embodiment of this application provides a computer-readable storage medium, where the computer-readable storage medium stores program code, and when the program code runs on a computer, the computer is enabled to perform the method according to the first aspect, the second aspect, or the third aspect.

According to a sixth aspect, an embodiment of this application provides a computer program product, where when the computer program product is run on a computer, the computer is enabled to perform the method according to the first aspect, the second aspect, or the third aspect.

According to a seventh aspect, an embodiment of this application provides a chip, where the chip is coupled to a memory and is configured to read and execute program instructions stored in the memory, to perform the method according to the first aspect, the second aspect, or the third aspect.

Based on the implementations provided in the foregoing aspects, embodiments of this application may be further combined to provide more implementations.

For technical effects that can be achieved in any one of the fourth aspect to the seventh aspect, correspondingly refer to descriptions of technical effects that can be achieved in the first aspect, the second aspect, and/or the third aspect. No repeated description is provided herein.

BRIEF DESCRIPTION OF DRAWINGS

FIG. 1 is a diagram of indoor signal detection according to an embodiment of this application;
FIG. 2 is a diagram of IRS signal processing according to an embodiment of this application;
FIG. 3 is a diagram of reflected beams in a near field scenario according to an embodiment of this application;
FIG. 4 is a diagram of a system architecture according to an embodiment of this application;
FIG. 5 is a schematic flowchart of a communication method according to an embodiment of this application;
FIG. 6 is a schematic flowchart of a communication method according to an embodiment of this application;
FIG. 7 is a diagram of a communication method according to an embodiment of this application;
FIG. 8 is a schematic flowchart of a communication method according to an embodiment of this application;
FIG. 9 is a schematic flowchart of a communication method according to an embodiment of this application;
FIG. 10 is a diagram of a structure of a communication apparatus according to an embodiment of this application;
FIG. 11 is a diagram of a structure of a communication apparatus according to an embodiment of this application; and
FIG. 12 is a diagram of a communication apparatus according to an embodiment of this application.

DESCRIPTION OF EMBODIMENTS

The following clearly and completely describes technical solutions in embodiments of this application with reference to accompanying drawings in embodiments of this application. The terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that, in embodiments of this application, "one or more" refers to one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

"A plurality of" in embodiments of this application indicates two or more. It should be noted that in the descriptions of embodiments of this application, the terms such as "first" and "second" are merely intended for distinction in description, but should not be construed as indicating or implying relative importance or indicating or implying a sequence.

To better describe a near-field beam processing method provided in embodiments of this application, concepts and terms in embodiments of this application are first briefly described.

An intelligent reflecting surface (Intelligent Reflecting Surface, IRS/RIS) is a large-scale antenna array including a large quantity of reconfigurable passive elements. Each element can independently cause a phase shift of an incident signal, to cooperatively change propagation of a reflected signal. Compared with an amplify-and-forward (amplify-and-forward, AF) relay that assists source-destination transmission by amplifying and regenerating signals, the IRS does not use a transmitter module, and only reflects received signals by using a passive array, and therefore consumes no transmit power. In addition, the IRS is mainly configured to improve performance of an existing communication link, instead of transferring information of the IRS through reflection. A direct path signal in backscatter communication is an interference signal, and generally needs to be suppressed or eliminated on a receiver. However, in an IRS enhanced communication process, both the direct path signal and a reflection path signal carry same useful information, and therefore, coherent superposition may be performed on the receiver, to increase a total received power.

As a passive full-duplex device, the IRS not only has low energy consumption, but also has high spectrum efficiency in a full-duplex mode. In addition, there is no self-interference, and no information interference occurs during reflection. Because the IRS does not need to perform information processing when receiving or transmitting a signal, transmission efficiency can be improved.

UE (User Equipment, user equipment) is a device such as a mobile phone or a laptop.

CPE (Customer-Premises Equipment, customer-premises equipment) is a device such as a mobile hotspot (such as Wi-Fi).

FWA (Fixed Wireless access, fixed wireless access) is an access mode in which wireless transmission is partially or completely used between a service node and user equipment.

A BS (Base Station, base station) is a public mobile telecommunication base station.

A CSI-RS (Channel State Information-Reference Signal, channel state information-reference signal) is a reference signal that reflects signal strength and a phase.

An SRS (Sounding Reference Signal, sounding reference signal) is used to estimate frequency domain information of an uplink channel and perform frequency selective scheduling in wireless communication; or is used to estimate a downlink channel and perform downlink beamforming.

Currently, due to reasons such as a floor height, street deployment, and development of communication technologies, in some scenarios, communication cannot be performed by installing an optical fiber to connect to a network. Therefore, indoor wireless network communication (that is, FWA) needs to be provided for a user in a manner of wireless bandwidth to home.

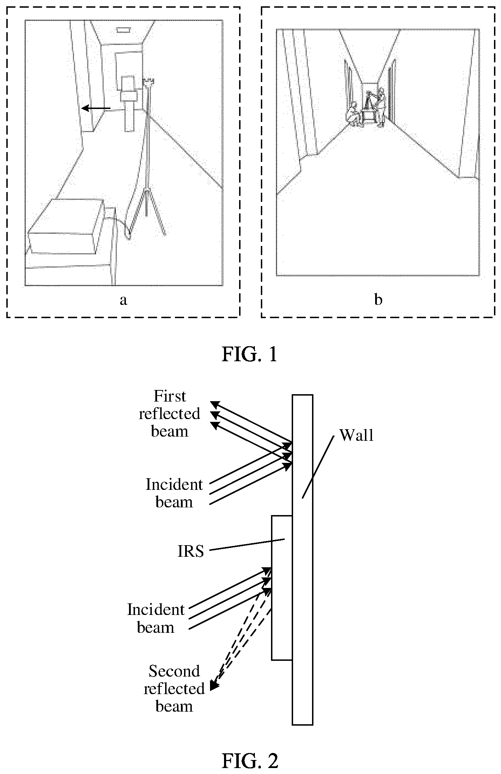

In an indoor wireless network communication scenario or an FWA scenario, there is a region with poor network signal coverage, such as a corner. FIG. 1 is a diagram of indoor signal detection according to an embodiment of this application. As shown in FIG. 1, an arrow direction in a in FIG. 1 represents an indoor corner direction, and b in FIG. 1 represents an indoor corner position. A signal detection apparatus represented by a in FIG. 1 detects signal strength of a terminal device at b in FIG. 1. It is found through detection that the signal strength at the corner position is low, a network signal is weak, and a communication rate is low.

In a related technology, an IRS is installed in an indoor scenario or an FWA scenario to perform directional reflection on an incident signal, to reduce a signal energy loss caused by wall diffuse reflection, thereby improving signal strength and strength of a signal received by the terminal device, and further improving network experience of an indoor user.

FIG. 2 is a diagram of IRS signal processing according to an embodiment of this application. As shown in FIG. 2, when there is no IRS, an incident beam formed based on an incident signal is reflected by a wall to generate a first reflected beam; or when there is an IRS, an incident beam formed based on an incident signal is reflected by a wall to generate a second reflected beam. It can be learned that the IRS has a capability of adjusting an angle of a reflected signal, to change an angle of a reflected beam, thereby improving strength of a signal obtained by a terminal device.

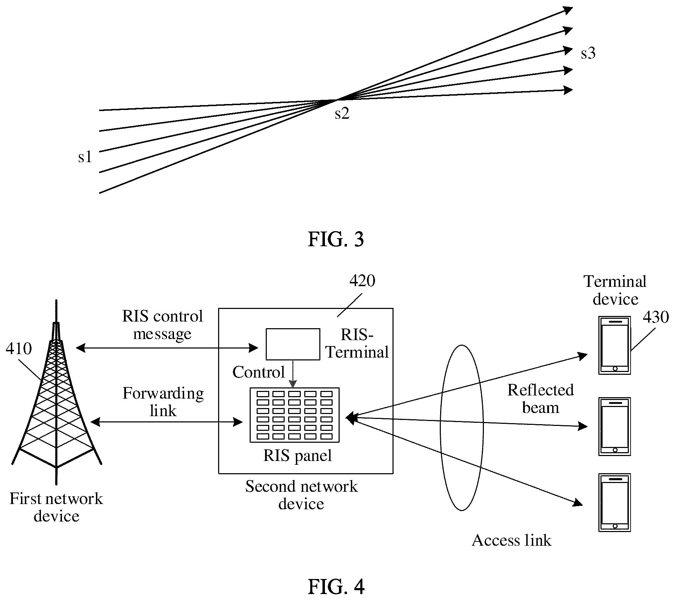

There are two scenarios for the reflected beam generated based on the IRS: a near field scenario and a far field scenario. In the far field scenario, the reflected beam generated by the IRS is approximately a plane wave. However, in the near field scenario, the reflected beam generated by the IRS cannot be approximated to a plane wave, leading to a gain loss of the reflected beam. FIG. 3 is a diagram of reflected beams in a near field scenario according to an embodiment of this application. As shown in FIG. 3, signal energy at a position s1 and a position s3 is weaker, and signal energy at a position s2 is stronger.

In the FWA scenario and the indoor scenario, if the IRS is excessively close to the terminal device, and the IRS works at a high frequency (for example, a millimeter-wave band), energy of the reflected beam generated by the IRS has a loss. Consequently, energy of the signal received by the terminal device is weak, and wireless communication of the terminal device is affected.

The following Table 1 shows an example of an energy gain loss, at the terminal device, of the reflected beam generated by the IRS.

Table 1

| IRS size = 0.4 m x 0.4 m | Emergent angle of the reflected beam: 0° | Emergent angle of the reflected beam: 60° |
| --- | --- | --- |
| Array gain loss: 1 dB | Distance between the IRS and the terminal device < 14.9 m | Distance between the IRS and the terminal device < 7.5 m |
| Array gain loss: 2 dB | Distance between the IRS and the terminal device < 10.4 m | Distance between the IRS and the terminal device < 5.2 m |

As shown in Table 1, the IRS size = 0.4 m x 0.4 m, and an operating frequency band is 28 GHz. Reflection angles of the reflected beams generated by the IRS are different, and ranges of the reflected beams in the near field scenarios are also different. In the near field scenario, the distances between the IRS and the terminal device are different, and array gain losses are also different. The array gain loss is negatively correlated with the distance between the IRS and the terminal device.

Therefore, a communication method is urgently needed to reduce an energy gain loss of a reflected beam received by the terminal device in the near field scenario, and improve strength of a signal received by the terminal device.

FIG. 4 is a diagram of a system architecture according to an embodiment of this application. In the figure, a first network device 410, a second network device 420, and a terminal device 430 are included.

The first network device 410 is a radio access network (radio access network, RAN) node (or device) that connects the terminal device 430 to a wireless network, and may also be referred to as a base station (BS). Currently, examples of some RAN nodes are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like.

In this embodiment of this application, the first network device 410 may be a BS, and is configured to: receive a first uplink reference signal reported by the second network device 420 and a second uplink reference signal reported by the terminal device 430, to determine first distance information between the second network device 420 and the terminal device 430; or receive first distance information that is reported by the second network device 420 and that is determined based on a third uplink reference signal reported by the terminal device 430. Then, the first network device determines, based on the first distance information, whether the terminal device 430 is in a near field scenario of a reflected beam generated by the second network device 420, and further sends first indication information to the second network device 420.

The second network device 420 may be an IRS (or an RIS), and is configured to reflect a received signal to a direction. Alternatively, the second network device 420 may be another network device, for example, a base station having an IRS, or a base station or a network element having an IRS function, a base station or another network element that implements a signal reflection function, or another network element that receives indication information from a network device and completes phase adjustment, processing, and sending.

In this embodiment of this application, the second network device 420 is configured to: receive the first indication information, and modify first weight information of the second network device to second weight information based on the first indication information, to generate a reflected beam based on the second weight information, thereby improving strength of a signal received by the terminal device.

The terminal device 430 may be user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. This is not specifically limited herein.

In this embodiment of this application, the terminal device 430 is configured to report channel state information to the first network device 410, so that the first network device 410 preferably selects the second weight information, and the second network device 420 generates a reflected beam based on the second weight information, to improve strength of a signal received by the terminal device.

The structure shown in FIG. 4 is merely an example, and is not limited in embodiments of the present invention.

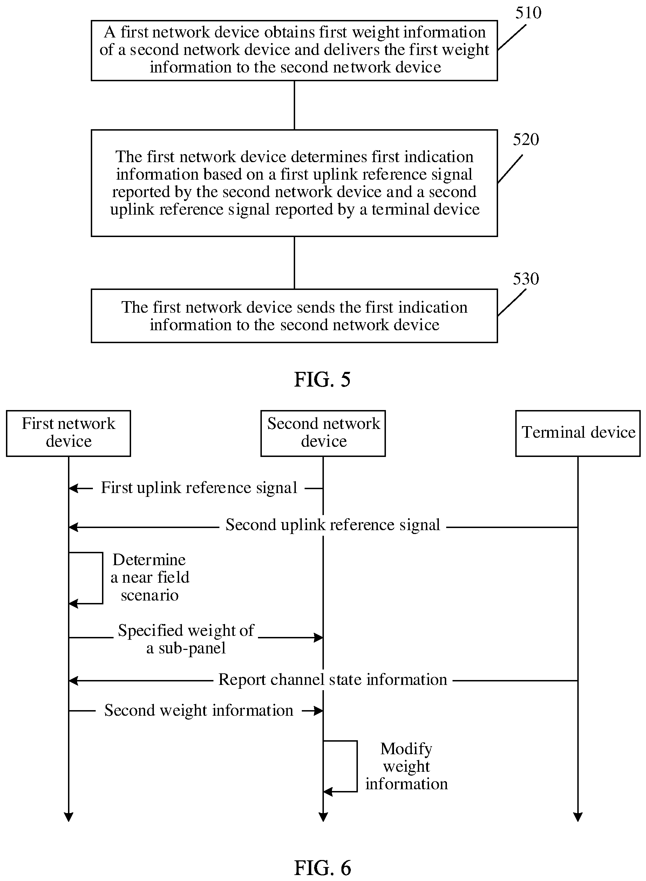

Based on the foregoing descriptions, FIG. 5 is a schematic flowchart of a communication method according to an embodiment of this application. The procedure may be performed by a near-field beam processing apparatus.

As shown in FIG. 5, the procedure specifically includes the following steps.

Step 510: A first network device obtains first weight information of a second network device, and delivers the first weight information to the second network device.

In this embodiment of this application, the first weight information includes current phase information of each array element of the second network device. The first network device sends a downlink reference signal to a terminal device, and receives channel state information fed back by the terminal device based on the downlink reference signal. The first network device determines the first weight information of the second network device based on the channel state information, and delivers the first weight information to the second network device, so that the current weight information of the second network device is the first weight information, where the first weight information is associated with a first phase of each array element of the second network device.

Step 520: The first network device determines first indication information based on a first uplink reference signal reported by the second network device and a second uplink reference signal reported by the terminal device.

In this embodiment of this application, the first indication information indicates second weight information of the second network device. Further, in an implementation, the first network device sends the second weight information to the second network device, and the first indication information indicates the second network device to modify the first weight information to the second weight information. In another implementation, the first indication information indicates the second network device to determine the second weight information, so as to modify the first weight information to the second weight information.

The first weight information is separately associated with the second weight information and the first indication information, and the second weight information is a weight of the second network device when the first network device communicates with the terminal device.

The first uplink reference signal and the second uplink reference signal are used to determine first distance information. The first distance information may be represented as an actual physical distance between the second network device and the terminal device. The first distance information may alternatively be represented as other information such as a transmission delay of a signal between the second network device and the terminal device. The first distance information is used to determine whether the terminal device is currently in a near field scenario. For different scenarios, the first indication information generated by the first network device is different.

Step 530: The first network device sends the first indication information to the second network device.

In this embodiment of this application, after the first network device sends the first indication information, the second network device modifies the first weight information to the second weight information based on the first indication information, and generates a reflected beam based on the second weight information, to increase a beam gain at a location of the terminal device in the reflected beam and improve strength of a signal obtained by the terminal device.

In step 520, the first network device determines the first distance information between the second network device and the terminal device based on the first uplink reference signal reported by the second network device and the second uplink reference signal reported by the terminal device. The second uplink reference signal is reported by the terminal device through the second network device.

For example, the first network device is a BS, the second network device is an IRS, and the terminal device is UE. The BS separately receives the first uplink reference signal sent by the IRS and the second uplink reference signal sent by the UE, and separately obtains locations $\tau_1$ and $\tau_2$ of strongest delay domain taps of the first uplink reference signal and the second uplink reference signal, where the locations are respectively denoted as a first delay and a second delay, and an optimal delay may be represented as $\Delta t = \tau_2 - \tau_1$. Then, a product of the optimal delay $\Delta t$ and a speed of light c is used as the first distance information, and may be represented as $d = \Delta t \cdot c$.

To improve accuracy of the first distance information, the BS may repeatedly perform the foregoing steps for a plurality of times. To be specific, K first uplink reference signals and K second uplink reference signals are received, which are respectively denoted as $\tau_{1.1}$, $\tau_{2.1}$, $\tau_{1.2}$, $\tau_{2.2}$, ..., $\tau_{1.K}$, and $\tau_{2.K}$. First delays of the K first uplink reference signals and second delays of the K second uplink reference signals are obtained, which are respectively denoted as $\Delta t_1$, $\Delta t_2$, ..., and $\Delta t_K$. Then, the optimal delay $\Delta t$ is determined, for example, $\Delta t = (\Delta t_1 + ... + \Delta t_K)/K$.

After obtaining the optimal delay, the first network device may use the product of the optimal delay and the speed of light c as the first distance information, that is, the first distance information is represented as $d = \Delta t \cdot c$.

In this embodiment of this application, the first distance information may be a physical distance between the IRS and the UE that is calculated based on the speed of light and the optimal delay in the foregoing example, or may be other information related to the physical distance between the IRS and the UE, for example, the optimal delay. Details are not described herein again.

In another implementation, the first distance information between the second network device and the terminal device is determined based on a third uplink reference signal reported by the terminal device. Determining the first distance information based on the third uplink reference signal may be performed by the first network device, the second network device, or another network device. This is not specifically limited herein.

For example, the foregoing step is performed by the second network device. The second network device receives the third uplink reference signal sent by the terminal device, and determines the first distance information between the second network device and the terminal device based on a transmission delay in obtaining the third uplink reference signal.

Further, for example, the second network device is an IRS, and the terminal device is UE. The IRS receives the third uplink reference signal sent by the UE, obtains a location $\tau_1$ of a strongest delay domain tap of the third uplink reference signal, and calculates an optimal delay $\Delta t = \tau_1$.

To improve accuracy of the first distance information, the IRS may repeatedly perform the foregoing steps for a plurality of times. To be specific, the terminal device sends K third uplink reference signals, where K is an integer greater than 1. The second network device obtains K transmission delays, which are respectively denoted as $\Delta t_1$, $\Delta t_2$, ..., and $\Delta t_K$. An optimal delay $\Delta t$ is determined based on the K transmission delays, for example, $\Delta t = (\Delta t_1 + ... + \Delta t_K)/K$. Then, a product of the optimal delay and a speed of light c is used as the first distance information, and may be represented as $d = \Delta t \cdot c$.

In this embodiment of this application, before determining the first indication information, the first network device receives panel information reported by the second network device. The panel information includes one or more of the following parameters: a quantity of horizontal array elements, a quantity of vertical array elements, an array element spacing, array element distribution, a panel size, and a panel orientation of the second network device.

After obtaining the panel information reported by the second network device, the first network device determines distance threshold information based on the panel information.

In an implementation, the distance threshold information is calculated according to the following Formula (1):

$$d_t = \frac{2D^2}{\lambda} \quad (1)$$

$d_t$ represents the distance threshold information; D represents a panel area of the second network device, where the panel area may be determined based on the panel size; and $\lambda$ represents a wavelength of a signal.

In another implementation, the distance threshold information is calculated according to the following Formula (2):

$$d_t = 0.367 * \cos^2\theta * \frac{2D^2}{\lambda} \quad (2)$$

$d_t$ represents the distance threshold information, D represents a panel area of the second network device, $\lambda$ represents a wavelength of a signal, $\theta$ represents an optimal direction pointing from the second network device to the terminal device, where $\theta$ may be obtained through beam management performed based on a far field scenario, and is denoted as a first angle. In an implementation, the first angle is determined based on a first reflected beam generated based on the first weight information.

In step 520, the first network device determines a scenario of the terminal device based on the first distance information and the distance threshold information, where the scenario includes the near field scenario and the far field scenario.

Specifically, if determining that a specified condition is met when the terminal device communicates with the second network device based on the first reflected beam, the first network device determines that the terminal device is in the near field scenario; otherwise, the first network device determines that the terminal device is in the far field scenario. The specified condition includes that a physical distance between the second network device and the terminal device is less than the distance threshold information, and/or a communication delay between the second network device and the terminal device is less than delay threshold information, where the delay threshold information may be a value preset based on experience. This is not specifically limited herein.

Further, for example, if the physical distance between the second network device and the terminal device is less than the distance threshold information, it is determined that the terminal device is in the near field scenario; or if the physical distance between the second network device and the terminal device is not less than the distance threshold information, it is determined that the terminal device is in the far field scenario.

In the near field scenario, an embodiment of this application shows an example of the following two manners of determining the first indication information.

Manner 1:

The first network device determines panel grouping information of the second network device based on the first distance information and the distance threshold information. The panel grouping information is used to group all array elements on a panel of the second network device into at least two sub-panels, and array elements on any two sub-panels are not intersected. A union set of array elements on all sub-panels is all the array elements of the second network device.

In some embodiments, the panel grouping information may include a quantity of groups, and the quantity of groups is calculated according to the following Formula (3):

$$p = k + q; \quad \frac{d}{d_t} \in \left( \frac{1}{2^{k+1}}, \frac{1}{2^k} \right) \quad (3)$$

p represents the quantity of groups; k is a positive integer determined based on the first distance information and the distance threshold information, for example, when $\frac{d}{d_t} = 0.7$, and $0.7 \in \left( \frac{1}{2^1}, \frac{1}{2^0} \right)$, it indicates that k=0; and q is a specified value, and is not specifically limited herein.

Based on the descriptions of the foregoing Formula (3), for example, q=2, and the quantity of groups is calculated, namely, p=2.

After calculating the quantity of groups, the first network device groups the panel of the second network device into at least two sub-panels based on the quantity of groups and the panel information of the second network device. For example, the panel of the second network device is grouped into two sub-panels based on parameters such as the quantity of groups, a quantity of array elements of the second network device, and the panel size.

In this embodiment of this application, after grouping the second network device into at least two sub-panels, the first network device determines N sets of specified weights based on information about each sub-panel (for example, a quantity of horizontal array elements, a quantity of vertical array elements, an array element spacing, and array element distribution of the sub-panel). A manner of determining the N sets of specified weights may be preset based on experience. For example, based on the first weight information, an initial phase of a weight corresponding to each sub-panel is adjusted. Other manners of determining the N sets of specified weights are not specifically limited herein.

In this embodiment of this application, any set of specified weights corresponds to an array element phase of each sub-panel. For example, the panel of the second network device is denoted as D, and includes five array elements $[z_1,z_2,z_3,z_4,z_5]$. In this case, the first weight information may be represented as $\Phi_1=[\varphi_1,\varphi_2,\varphi_3,\varphi_4,\varphi_5]$. $[\varphi_1,\varphi_2,\varphi_3,\varphi_4,\varphi_5]$ respectively represent first phases corresponding to $[z_1,z_2,z_3,z_4,z_5]$.

Further, the quantity of groups p=2 is used as an example. The second network device includes two sub-panels $D_1$ and $D_2$. The sub-panel $D_1$ includes two array elements $z_1$ and $z_2$, and the sub-panel $D_2$ includes three array elements $z_3$, $z_4$, and $z_5$. Any set of specified weights includes two parts. One part includes two second phases $w_1$ and $w_2$, where the second phase $w_1$ corresponds to the first phase $\varphi_1$ of the array element $z_1$, and the second phase $w_2$ corresponds to the first phase $\varphi_2$ of the array element $z_1$. The other part includes three second phases $w_3$, $w_4$, and $w_5$, where the second phase $w_3$ corresponds to the first phase $\varphi_3$ of the array element $z_3$, the second phase $w_4$ corresponds to the first phase $\varphi_4$ of the array element $z_4$, and the second phase $w_3$ corresponds to the first phase $\varphi_5$ of the array element $z_5$. That is, for the sub-panels $D_1$ and $D_2$, an $i^{th}$ set of specified weights includes $\Phi_{1,1}^{i}=[w1,w2]$ and $\Phi_{1,2}^{i}=[w3,w4,w5]$.

After determining the N sets of specified weights, the first network device sends the N sets of specified weights to the second network device, so that the second network device traverses and switches the N sets of specified weights.

Further, in an implementation, the first network device sends second indication information to the second network device, where the second indication information includes N sets of specified weights corresponding to each sub-panel, N reference signal time-frequency resources, and an association relationship between the N reference signal time-frequency resources and the N sets of specified weights. In this embodiment of this application, the N reference signal time-frequency resources are in one-to-one correspondence with the N sets of specified weights. The reference signal time-frequency resource may indicate that the N sets of specified weights are distinguished by time, by frequency, or by two-dimensional information of time and frequency.

The first network device sends a downlink reference signal based on the N reference signal time-frequency resources. For example, the first network device sends a downlink reference signal (for example, a CSI-RS signal) on an $i^{th}$ reference signal time-frequency resource. The downlink reference signal received by the terminal device is reflected by the second network device.

When receiving the downlink reference signal on the $i^{th}$ reference signal time-frequency resource, the terminal device reports channel state information corresponding to the $i^{th}$ downlink reference signal, that is, an $i^{th}$ piece of channel state information. Because the second network device switches to an $i^{th}$ set of specified weights on the $i^{th}$ reference signal time-frequency resource, the $i^{th}$ piece of channel state information fed back by the terminal device can reflect performance of a signal obtained by the terminal device in a reflected beam generated based on the $i^{th}$ set of specified weights and a beam gain at a location of the terminal device.

After the N sets of specified weights are traversed, that is, after the first network device receives N pieces of channel state information fed back by the terminal device, the first network device selects one set of specified weights from the N sets of specified weights as the second weight information based on the N pieces of channel state information, and then determines the first indication information based on the second weight information. In this embodiment of this application, a set of specified weights corresponding to optimal channel state information is selected as the second weight information.

To better describe the foregoing technical solutions, FIG. 6 is a schematic flowchart of a communication method according to an embodiment of this application. As shown in FIG. 6, the procedure includes the following steps.

For example, the first network device is a BS, the second network device is an IRS, and the terminal device is UE. The IRS sends a first uplink reference signal to the BS, and the UE sends a second uplink reference signal to the BS through the IRS. The BS calculates a first delay based on the first uplink reference signal, calculates a second delay based on the second uplink reference signal, and calculates first distance information based on the first delay and the second delay.

The BS determines distance threshold information based on panel information of the IRS, and then when determining that the first distance information is less than the distance threshold information, determines that the UE is in a near field scenario. Then, the BS groups the IRS into at least two sub-panels, and sends N sets of specified weights corresponding to each sub-panel to the IRS.

The BS receives N pieces of channel state information that are reported by the UE and that correspond to the N sets of specified weights, selects, based on the N pieces of channel state information, a set of specified weights corresponding to optimal channel state information as second weight information, and sends the second weight information to the IRS, so that the IRS correspondingly modifies a phase of each array element of the IRS to the second weight information.

Based on the foregoing solution, when determining that the terminal device is in the near field scenario, the first network device groups a panel of the second network device into at least two sub-panels, so that a reflected beam generated on any sub-panel is a far-field beam instead of a near-field beam for the terminal device, to avoid an energy gain loss of the reflected beam at the terminal device in the near field scenario. The set of specified weights corresponding to the optimal channel state information is selected as the second weight information, so that a beam gain of a reflected beam generated based on the second weight information at the location of the terminal device can be increased, thereby improving performance of a signal obtained by the terminal device.

Manner 2:

The first network device sends the first indication information, to indicate the second network device to calculate the second weight information. In this embodiment of this application, Manner 2 includes two cases. In a first case, the first distance information is calculated by the first network device. In a second case, the first distance information is calculated by the second network device.

For the first case, the first indication information includes the first distance information. For the second case, the first indication information does not include the first distance information.

In Manner 2, after the second network device receives the first indication information, the second network device determines a first angle $\theta$ pointing from a center of a panel of the second network device to the terminal device, where the first angle corresponds to the first weight information of the second network device. The second network device determines second distance information between each array element and the terminal device based on the first angle and the first distance information. For any array element, the second network device determines a second phase of the array element based on the second distance information between the array element and the terminal device, where the second weight information is associated with the second phase of each array element. The center of the panel may also be a central array element.

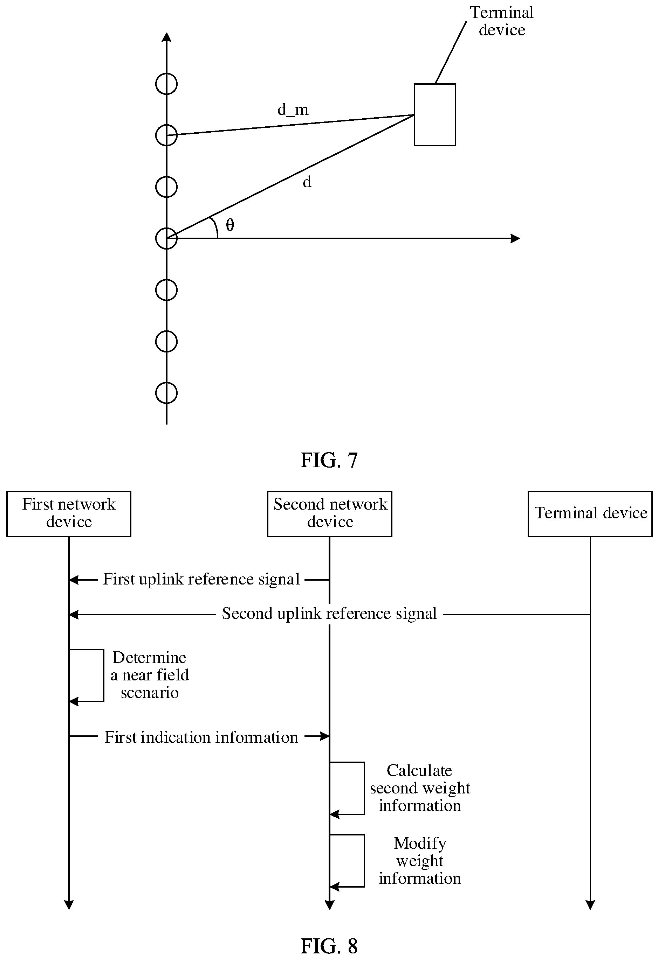

FIG. 7 is a diagram of a communication method according to an embodiment of this application. As shown in FIG. 7, beam management is performed based on a far field scenario of a first network device, and a first angle $\theta$ pointing from a central array element of a second network device to a terminal device is determined based on a beam management result (that is, first weight information) and panel information reported by the second network device. The first weight information may be represented as $\Phi_1=[\varphi_1,...,\varphi_N]$, and $\varphi_m$ represents a first phase of an $m^{th}$ array element.

Based on the foregoing descriptions, first distance information d between the central array element and the terminal device may be determined. For the $m^{th}$ array element of the second network device, second distance information $d_m$ between the $m^{th}$ array element and the terminal device may be determined based on the first angle $\theta$ and the first distance information d. A second phase of the $m^{th}$ array element is calculated according to the following Formula (4):

$$w_m = \frac{1}{\sqrt{N}} * e^{\frac{j*2\pi}{\lambda}\sqrt{d^2+(\delta^m h)^2-2(\delta^m h)*d*\sin\theta}} \quad (4)$$

$w_m$ represents the second phase of the $m^{th}$ array element, N represents a quantity of array elements, e represents a natural base, j represents an imaginary unit, $\delta^m h$ represents a distance between the $m^{th}$ array element and the central array element, and $1 \leq m \leq N$. The second weight information is calculated as $\Phi_2=[w_1,...,w_N]$.

To better describe the foregoing technical solutions, FIG. 8 is a schematic flowchart of a communication method according to an embodiment of this application. As shown in FIG. 8, the procedure includes the following steps.

For example, the first network device is a BS, the second network device is an IRS, and the terminal device is CPE. The IRS sends a first uplink reference signal to the BS, and the CPE sends a second uplink reference signal to the BS through the IRS. The BS calculates a first delay based on the first uplink reference signal, calculates a second delay based on the second uplink reference signal, and calculates first distance information based on the first delay and the second delay.

The BS determines distance threshold information based on panel information of the IRS, and then when determining that the first distance information is less than the distance threshold information, determines that the CPE is in a near field scenario. Then, the BS sends first indication information to the IRS, where the first indication information includes the first distance information.

After receiving the first indication information, the IRS determines a first angle pointing from a central array element of the IRS to the terminal device, and then determines second distance information between each array element and the terminal device based on the first angle and the first distance information.

For any array element, the IRS determines a second phase of the array element based on the second distance information between the array element and the terminal device. After determining the second phase of each array element, the IRS modifies a first phase of each array element to the second phase, that is, modifies first weight information to second weight information.

Based on the foregoing solution, after calculating the second phase of each array element, the second network device modifies, for any array element, a first phase of the array element to the second phase, to modify the first weight information to the second weight information. Because the second weight information is calculated based on the first angle θ, a reflected signal is converged to a location of the terminal device by using a reflected beam generated based on the second weight information, so that a beam gain, at the terminal device, of the reflected beam generated based on the second weight information is increased, thereby improving strength of a signal received by the terminal device.

In this embodiment of this application, a manner of determining the second weight information based on the first angle may be performed by the first network device, the second network device, or another network device. A specific execution process is consistent with the foregoing steps. Details are not described herein again.

For a far field scenario, the first network device generates the first indication information based on an association relationship between the second weight information and the first weight information, where the association relationship indicates that the first weight information is the same as the second weight information. In other words, if it is determined that the terminal device is in the far field scenario, the second network device does not need to modify weight information of the second network device. Therefore, in an implementation, the first indication information further indicates the second network device not to modify the weight information of the second network device. In another implementation, if it is determined that the terminal device is in the far field scenario, the first indication information is not sent to the second network device. In still another implementation, if it is determined that the terminal device is in the far field scenario, the first indication information sent to the second network device includes the second weight information that is the same as the first weight information.

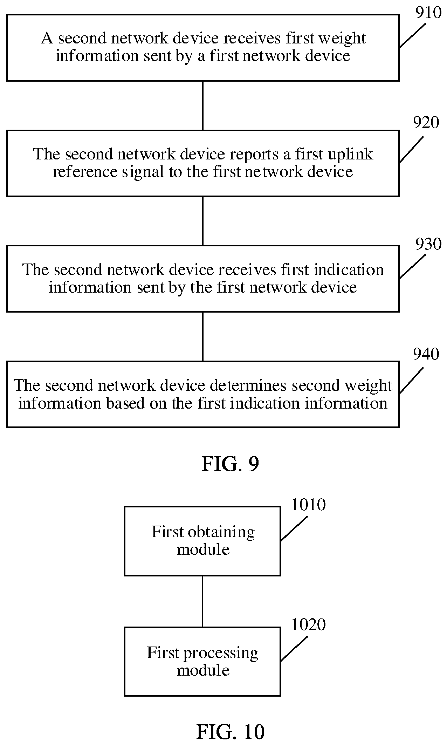

Based on the foregoing descriptions, FIG. 9 is a schematic flowchart of a communication method according to an embodiment of this application. The procedure may be performed by a near-field beam processing apparatus.

As shown in FIG. 9, the procedure specifically includes the following steps.

Step 910: A second network receives first weight information sent by a first network device.

Step 920: The second network device reports a first uplink reference signal to the first network device.

Step 930: The second network device receives first indication information sent by the first network device.

Step 940: The second network device determines second weight information based on the first indication information.

In step 920, the first uplink reference signal is used by the first network device to calculate first distance information. A specific calculation manner of the first distance information is described in FIG. 5, and details are not described herein again.

In step 930, the first indication information includes the following three possible scenarios.

First scenario: If the first indication information includes the second weight information, the second network device directly modifies the first weight information to the second weight information.

In the first scenario, before receiving the first indication information, the second network device receives second indication information sent by the first network device, where the second indication information includes N sets of specified weights, N reference signal time-frequency resources, and an association relationship between the N reference signal time-frequency resources and the N sets of specified weights.

After receiving the second indication information, the second network device switches a weight of an $i^{th}$ reference signal time-frequency resource to an $i^{th}$ set of specified weights. A specific technical solution has been described in FIG. 5, and details are not described herein again.

Second scenario: The first indication information indicates the second network device to calculate the second weight information, where the first indication information may include the first distance information, or may not include the first distance information.

After receiving the first indication information, the second network device determines a first angle pointing from a center of a panel of the second network device to a terminal device; determines a second phase of each array element based on the first angle and the first distance information; and then modifies a first phase of each array element to the second phase, to modify the first weight information to the second weight information. A specific method for calculating the second phase of each array element has been described in FIG. 7, and details are not described herein again.

Third scenario: The first indication information includes an association relationship between the second weight information and the first weight information, indicating that the terminal device is in a far field scenario. For example, the association relationship is an identifier of "equal to", "=", or the like.

In the third scenario, the first indication information may indicate the second network device to modify the first weight information of the second network device to the second weight information, or may indicate the second network device not to modify the first weight information of the second network device.

In conclusion, in this embodiment of this application, if it is determined, based on the first distance information, that the terminal device is in a near field scenario of a reflected beam generated by the second network device, the second network device is indicated by using the first indication information whether to adjust the weight information, so as to reduce an energy gain loss of the reflected beam received by the terminal device in the near field scenario, thereby increasing a beam gain of the reflected beam generated by the second network device at a location of the terminal device, and improving strength of a signal received by the terminal device.

Based on the foregoing descriptions, an embodiment of this application provides a communication method. The method includes:

A terminal device reports a second uplink reference signal to a first network device, for the first network device to determine first indication information; and/or the terminal device reports a third uplink reference signal to a second network device, for the second network device to determine first distance information.

An embodiment of this application further provides a communication apparatus, configured to perform the steps in the foregoing methods. For related features, refer to the descriptions in the foregoing embodiments. Details are not described herein again. FIG. 10 is a diagram of a structure of a communication apparatus according to an embodiment of this application. Referring to FIG. 10, the apparatus includes:

a first obtaining module 1010, configured to: obtain first weight information of a second network device, and deliver the first weight information to the second network device; and

a first processing module 1020, configured to: determine first indication information based on a first uplink reference signal reported by the second network device and a second uplink reference signal reported by a terminal device, where the first indication information indicates second weight information of the second network device, the first weight information is separately associated with the second weight information and the first indication information, and the second weight information is a weight of the second network device when a first network device communicates with the terminal device; and

send the first indication information to the second network device.

In some embodiments, the first processing module 1020 is further configured to:

receive panel information reported by the second network device, where the panel information includes at least one of the following: a quantity of horizontal array elements, a quantity of vertical array elements, an array element spacing, a panel size, and a panel orientation of the second network device.

In some embodiments, the first processing module 1020 is further configured to:

determine panel grouping information of the second network device based on the panel information, the first uplink reference signal, and the second uplink reference signal, where the panel grouping information is used to group all array elements on a panel of the second network device into at least two sub-panels, and array elements on any two sub-panels are not intersected; and

send the panel grouping information to a second network.

In some embodiments, the first processing module 1020 is specifically configured to:

send second indication information to the second network device, where the second indication information indicates N sets of specified weights corresponding to each sub-panel, N reference signal time-frequency resources, and an association relationship between the N reference signal time-frequency resources and the N sets of specified weights, to indicate that a weight of the second network device on an $i^{th}$ reference signal time-frequency resource is an $i^{th}$ set of specified weights, and $1 \leq i \leq N$.

In some embodiments, the first processing module 1020 is specifically configured to:

send a downlink reference signal at an $i^{th}$ reference signal time-frequency resource location, and receive an $i^{th}$ piece of channel state information reported by the terminal device, where the downlink reference signal is reflected by the second network device to the terminal device; and

determine, by the first network device, the first indication information based on N pieces of channel state information.

In some embodiments, the first processing module 1020 is specifically configured to:
determine the first indication information based on the panel information reported by the second network device.

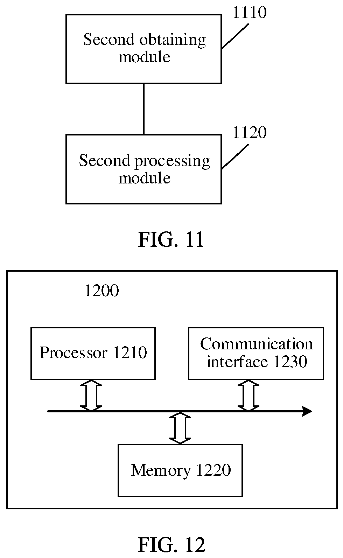

An embodiment of this application further provides a communication apparatus, configured to perform the steps in the foregoing methods. For related features, refer to the descriptions in the foregoing embodiments. Details are not described herein again. FIG. 11 is a diagram of a structure of a communication apparatus according to an embodiment of this application. Referring to FIG. 11, the apparatus includes:

a second obtaining module 1110, configured to receive first weight information and first indication information that are sent by a first network device; and

a second processing module 1120, configured to: report a first uplink reference signal to the first network device; and determine second weight information based on the first indication information, where the first weight information is separately associated with the second weight information and the first indication information, and the second weight is a weight of a second network device when the first network device communicates with a terminal device.

In some embodiments, the second processing module 1120 is further configured to:
report panel information to the first network device, where the panel information includes at least one of the following: a quantity of horizontal array elements, a quantity of vertical array elements, an array element spacing, a panel size, and a panel orientation of the second network device.

In some embodiments, the second obtaining module 1110 is further configured to:
receive panel grouping information sent by the first network device, where the panel grouping information is used to group all array elements on a panel of the second network device into at least two sub-panels, and array elements on any two sub-panels are not intersected.

In some embodiments, the second obtaining module 1110 is further configured to:
receive second indication information sent by the first network device, where the second indication information indicates N sets of specified weights corresponding to each sub-panel, N reference signal time-frequency resource locations, and an association relationship between the N reference signal time-frequency resource locations and the N sets of specified weights, a weight of the second network device on an $i^{th}$ reference signal time-frequency resource is an $i^{th}$ set of specified weights, and $1 \le i \le N$.

In some embodiments, the first indication information is determined by the first network device based on the panel information reported by the second network device.

In a simple embodiment, a person skilled in the art may figure out that the communication apparatus in the foregoing embodiments may be in a form shown in FIG. 12.

An apparatus 1200 shown in FIG. 12 includes at least one processor 1210 and a memory 1220, and optionally, may further include a communication interface 1230.

A specific connection medium between the processor 1210 and the memory 1220 is not limited in embodiments of this application. The apparatus in FIG. 12 further includes the communication interface 1230. When communicating with another device, the processor 1210 may transmit data through the communication interface 1230.

It should be understood that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that they fall within the scope of the following claims of this application and their equivalent technologies.

**Claims**

1. A communication method, wherein the method comprises:

obtaining, by a first network device, first weight information of a second network device, and delivering the first weight information to the second network device;

determining, by the first network device, first indication information based on a first uplink reference signal reported by the second network device and a second uplink reference signal reported by a terminal device, wherein the first indication information indicates second weight information of the second network device, the first weight information is separately associated with the second weight information and the first indication information, and the second weight information is a weight of the second network device when the first network device communicates with the terminal device; and

sending, by the first network device, the first indication information to the second network device.

2. The method according to claim 1, wherein the method further comprises:
receiving, by the first network device, panel information reported by the second network device, wherein the panel information comprises at least one of the following: a quantity of horizontal array elements, a quantity of vertical array elements, an array element spacing, a panel size, and a panel orientation of the second network device.

3. The method according to claim 1 or 2, wherein the method further comprises:

determining, by the first network device, panel grouping information of the second network device based on the panel information, the first uplink reference signal, and the second uplink reference signal, wherein the panel grouping information is used to group all array elements on a panel of the second network device into at least two sub-panels, and array elements on any two sub-panels are not intersected; and

sending, by the first network device, the panel grouping information to a second network.

4. The method according to any one of claims 1 to 3, wherein the method further comprises:
sending, by the first network device, second indication information to the second network device, wherein the second indication information indicates N sets of specified weights corresponding to each sub-panel, N reference signal time-frequency resources, and an association relationship between the N reference signal time-frequency resources and the N sets of specified weights, to indicate that a weight of the second network device on an $i^{th}$ reference signal time-frequency resource is an $i^{th}$ set of specified weights, and $1 \leq i \leq N$.

5. The method according to any one of claims 1 to 4, wherein determining, by the first network device, the first indication information comprises:

sending, by the first network device, a downlink reference signal at an $i^{th}$ reference signal time-frequency resource location, and receiving an $i^{th}$ piece of channel state information reported by the terminal device, wherein the downlink reference signal is reflected by the second network device to the terminal device; and

determining, by the first network device, the first indication information based on N pieces of channel state information.

6. The method according to claim 1 or 2, wherein determining, by the first network device, the first indication information comprises:
determining, by the first network device, the first indication information based on the panel information reported by the second network device.

7. A communication method, wherein the method comprises:

receiving, by a second network, first weight information sent by a first network device;

reporting, by the second network device, a first uplink reference signal to the first network device;

receiving, by the second network device, first indication information sent by the first network device; and

determining, by the second network device, second weight information based on the first indication information, wherein the first weight information is separately associated with the second weight information and the first indication information, and the second weight is a weight of the second network device when the first network device communicates with a terminal device.

8. The method according to claim 7, wherein the method further comprises:
reporting, by the second network device, panel information to the first network device, wherein the panel information comprises at least one of the following: a quantity of horizontal array elements, a quantity of vertical array elements, an array element spacing, a panel size, and a panel orientation of the second network device.

9. The method according to claim 7 or 8, wherein the method further comprises:
receiving, by the second network device, panel grouping information sent by the first network device, wherein the panel grouping information is used to group all array elements on a panel of the second network device into at least two sub-panels, and array elements on any two sub-panels are not intersected.

10. The method according to any one of claims 7 to 9, wherein the method further comprises:
receiving, by the second network device, second indication information sent by the first network device, wherein the second indication information indicates N sets of specified weights corresponding to each sub-panel, N reference signal time-frequency resource locations, and an association relationship between the N reference signal time-frequency resource locations and the N sets of specified weights, a weight of the second network device on an $i^{th}$ reference signal time-frequency resource is an $i^{th}$ set of specified weights, and $1 \le i \le N$.

11. The method according to claim 7 or 8, wherein the first indication information is determined by the first network device based on the panel information reported by the second network device.

12. A communication apparatus, comprising:

   a first obtaining module, configured to: obtain first weight information of a second network device, and deliver the first weight information to the second network device; and
   a first processing module, configured to: determine first indication information based on a first uplink reference signal reported by the second network device and a second uplink reference signal reported by a terminal device, wherein the first indication information indicates second weight information of the second network device, the first weight information is separately associated with the second weight information and the first indication information, and the second weight information is a weight of the second network device when a first network device communicates with the terminal device; and
   send the first indication information to the second network device.

13. The apparatus according to claim 12, wherein the first processing module is further configured to:
receive panel information reported by the second network device, wherein the panel information comprises at least one of the following: a quantity of horizontal array elements, a quantity of vertical array elements, an array element spacing, a panel size, and a panel orientation of the second network device.

14. The apparatus according to claim 12 or 13, wherein the first processing module is further configured to:

   determine panel grouping information of the second network device based on the panel information, the first uplink reference signal, and the second uplink reference signal, wherein the panel grouping information is used to group all array elements on a panel of the second network device into at least two sub-panels, and array elements on any two sub-panels are not intersected; and
   send the panel grouping information to a second network.

15. The apparatus according to any one of claims 12 to 14, wherein the first processing module is further configured to:
send second indication information to the second network device, wherein the second indication information indicates N sets of specified weights corresponding to each sub-panel, N reference signal time-frequency resources, and an association relationship between the N reference signal time-frequency resources and the N sets of specified weights, to indicate that a weight of the second network device on an $i^{th}$ reference signal time-frequency resource is an $i^{th}$ set of specified weights, wherein $1 \le i \le N$.

16. The apparatus according to any one of claims 12 to 15, wherein the first processing module is specifically configured to:

   send a downlink reference signal at an $i^{th}$ reference signal time-frequency resource location, and receive an $i^{th}$ piece of channel state information reported by the terminal device, wherein the downlink reference signal is reflected by the second network device to the terminal device; and

determine, by the first network device, the first indication information based on N pieces of channel state information.

17. The apparatus according to claim 12 or 13, wherein the first processing module is specifically configured to:
determine the first indication information based on the panel information reported by the second network device.

18. A communication apparatus, comprising:

a second receiving module, configured to receive first weight information and first indication information that are sent by a first network device; and
a second processing module, configured to: report a first uplink reference signal to the first network device; and determine second weight information based on the first indication information, wherein the first weight information is separately associated with the second weight information and the first indication information, and the second weight is a weight of a second network device when the first network device communicates with a terminal device.

19. The apparatus according to claim 18, wherein the second processing module is further configured to:
report panel information to the first network device, wherein the panel information comprises at least one of the following: a quantity of horizontal array elements, a quantity of vertical array elements, an array element spacing, a panel size, and a panel orientation of the second network device.

20. The apparatus according to claim 18 or 19, wherein the second receiving module is further configured to:
receive panel grouping information sent by the first network device, wherein the panel grouping information is used to group all array elements on a panel of the second network device into at least two sub-panels, and array elements on any two sub-panels are not intersected.

21. The apparatus according to any one of claims 18 to 20, wherein the second receiving module is further configured to:
receive second indication information sent by the first network device, wherein the second indication information indicates N sets of specified weights corresponding to each sub-panel, N reference signal time-frequency resource locations, and an association relationship between the N reference signal time-frequency resource locations and the N sets of specified weights, a weight of the second network device on an $i^{th}$ reference signal time-frequency resource is an $i^{th}$ set of specified weights, and $1 \leq i \leq N$.

22. The apparatus according to claim 18 or 19, wherein the first indication information is determined by the first network device based on the panel information reported by the second network device.

23. A communication apparatus, comprising one or more processors, wherein when instructions of one or more computer programs are executed by the one or more processors, the apparatus is enabled to perform the method according to any one of claims 1 to 6 or perform the method according to any one of claims 7 to 11.

24. A chip, wherein the chip is coupled to a memory and is configured to read and execute program instructions stored in the memory, to perform the method according to any one of claims 1 to 6 or perform the method according to any one of claims 7 to 11.

25. A computer program product, wherein when the computer program product is invoked by a computer, the computer is enabled to perform the method according to any one of claims 1 to 6 or perform the method according to any one of claims 7 to 11.

FIG. 1

FIG. 2

FIG. 3

FIG. 4

A first network device obtains first weight information of a second network device and delivers the first weight information to the second network device

510

The first network device determines first indication information based on a first uplink reference signal reported by the second network device and a second uplink reference signal reported by a terminal device

520

The first network device sends the first indication information to the second network device

530

FIG. 5

| First network device | Second network device | Terminal device |

← First uplink reference signal ⊣

← Second uplink reference signal ——

Determine a near field scenario

Specified weight of a sub-panel →

← Report channel state information ——

— Second weight information →

Modify weight information

FIG. 6

FIG. 7

FIG. 8

A second network device receives first weight information sent by a first network device — 910

The second network device reports a first uplink reference signal to the first network device — 920

The second network device receives first indication information sent by the first network device — 930

The second network device determines second weight information based on the first indication information — 940

FIG. 9

First obtaining module — 1010

First processing module — 1020

FIG. 10

1110

Second obtaining
module

1120

Second processing
module

**FIG. 11**

1200

Processor 1210

Communication
interface 1230

Memory 1220

**FIG. 12**

## INTERNATIONAL SEARCH REPORT

| International application No. |
| --- |
| **PCT/CN2023/142781** |

| A. | CLASSIFICATION OF SUBJECT MATTER |
| --- | --- |

H04W 16/28(2009.01)i

According to International Patent Classification (IPC) or to both national classification and IPC

| B. | FIELDS SEARCHED |
| --- | --- |

Minimum documentation searched (classification system followed by classification symbols)

IPC:H04W 16/-; H04W 24/-

Documentation searched other than minimum documentation to the extent that such documents are included in the fields searched

Electronic data base consulted during the international search (name of data base and, where practicable, search terms used)

CNABS, CNTXT, ENTXTC, CNKI, 百度, BAIDU: 智能反射面, 智能超表面, 可重构智能表面, 中继, 天线, 波束, 阵面, 阵列, 阵元, 权值, 参数, 系数, 相位, 幅度, 角度, 相移, 参考信号, 信道状态, 距离, 时延, 延时, 时间差; VEN, ENTXT, IEEE, 3GPP: RIS, IRS, reconfigurable intelligent surface, relay, repeater, antenna, weight, phase, amplitude, coefficient, parameter, RS, SRS, CSI, distance, delay, time

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114786189 A (XI'AN UNIVERSITY OF SCIENCE AND TECHNOLOGY) 22 July 2022 (2022-07-22)<br>description, paragraphs [0046]-[0049] | 1-2, 6-9, 11-13, 17-20, 22-25 |
| A | CN 112804695 A (BEIJING UNIVERSITY OF POSTS AND TELECOMMUNICATIONS) 14 May 2021 (2021-05-14)<br>entire document | 1-25 |
| A | CN 113747465 A (HUAWEI TECHNOLOGIES CO., LTD.) 03 December 2021 (2021-12-03)<br>entire document | 1-25 |
| A | CN 114745035 A (CHINA TELECOM CORP., LTD.) 12 July 2022 (2022-07-12)<br>entire document | 1-25 |
| A | US 2022014935 A1 (HUAWEI TECHNOLOGIES CO., LTD.) 13 January 2022 (2022-01-13)<br>entire document | 1-25 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 March 2024** | **27 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

International application No.

**PCT/CN2023/142781**

| Patent document cited in search report | | | Publication date (day/month/year) | Patent family member(s) | | | Publication date (day/month/year) |
|---|---|---|---|---|---|---|---|
| CN | 114786189 | A | 22 July 2022 | CN | 114786189 | B | 24 January 2023 |
| CN | 112804695 | A | 14 May 2021 | CN | 112804695 | B | 30 June 2023 |
| CN | 113747465 | A | 03 December 2021 | WO | 2021239067 | A1 | 02 December 2021 |
| CN | 114745035 | A | 12 July 2022 | CN | 114745035 | B | 02 January 2024 |
| US | 2022014935 | A1 | 13 January 2022 | CN | 115804180 | A | 14 March 2023 |
| | | | | US | 11570629 | B2 | 31 January 2023 |
| | | | | WO | 2022007417 | A1 | 13 January 2022 |

Form PCT/ISA/210 (patent family annex) (July 2022)

**EP 4 637 200 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310019054